# EUROPÄISCHE PATENTANMELDUNG

(11) **EP 4 751 960 A1**
(43) Veröffentlichungstag der Anmeldung: **03.06.2026**
(21) Anmeldenummer: 25213408.5
(22) Anmeldetag: 04.11.2025
(51) Int. Cl.: B60K 17/08, A01B 51/02, A01D 69/03, B60K 17/28, B62D 1/02, B62D 51/06, F16D 55/02, F16D 55/36, F16H 3/54, F16H 57/10, B60K 7/00, F16H 7/02, F16H 7/06, F16H 57/00, F16H 57/08, B60C 1/00

(54) **EINACHSTRAKTOR**

(30) Priorität: 28.11.2024 CH 13002024
(71) Anmelder: Aebi & Co. AG Maschinenfabrik, 3400 Burgdorf (CH)
(72) Erfinder: BIGLER, Patrik, 3400 Burgdorf (CH); HALTER, Lukas, 3400 Burgdorf (CH); BÄRTSCHI, Thomas, 3400 Burgdorf (CH)
(74) Vertreter: Grättinger Möhring von Poschinger Patentanwälte Partnerschaft mbB

(57) **Zusammenfassung**

Ein Einachstraktor umfasst eine Basisstruktur (1) mit einem daran angebauten Antriebsmotor (2), ein die Basisstruktur (1) abstützendes Fahrwerk (3) mit zwei angetriebenen Rädern (4) oder Gleisketten, einen Fahrantrieb mit zwei den beiden angetriebenen Rädern (4) bzw. Gleisketten zugeordneten Fahrmotoren und eine von dem Antriebsmotor (2) antreibbare, dem Betrieb von Anbaugeräten dienenden Zapf- bzw. Arbeitswelle (5). Dabei ist die Zapf- bzw. Arbeitswelle (5) koaxial zu der Abtriebswelle (8) des Antriebsmotors (2) angeordnet. Die Zapf- bzw. Arbeitswelle (5) ist drehfest mit der Ausgangswelle (28) eines Planetengetriebes (23) verbunden, dessen Eingangswelle (22) mit der Ausgangswelle (8) des Antriebsmotors (2) über eine zu dieser sowie zu der Zapf- bzw. Arbeitswelle (5) koaxiale Wellenanordnung drehverbindbar ist. Und das Planetengetriebe (23) verfügt über eine doppeltwirkende Bremseinrichtung dergestalt, dass wahlweise die Ausgangswelle (28) des Planetengetriebes (23) oder aber dessen Zwischentrieb (37) bremsbar ist.

## Beschreibung

Die vorliegende Erfindung betrifft einen Einachstraktor, umfassend eine Basisstruktur mit einem daran angebauten Antriebsmotor mit einer Abtriebswelle, ein die Basisstruktur abstützendes Fahrwerk mit zwei angetriebenen Rädern oder Gleisketten, einen Fahrantrieb mit zwei den beiden angetriebenen Rädern bzw. Gleisketten zugeordneten Fahrmotoren und eine von dem Antriebsmotor antreibbare, dem Betrieb von Anbaugeräten dienenden Zapf- bzw. Arbeitswelle.

Solche - auch als einachsige Geräteträger bezeichneten - Einachstraktoren sind verbreitet insbesondere in der Landwirtschaft, aber auch beispielsweise im Kommunalbereich (z. B. für den Winterdienst), in der Arealpflege, etc. im Einsatz. In der Landwirtschaft kommen sie, z. B. mit einem Mähwerk als Anbaugerät bestückt, namentlich im Rahmen der Bewirtschaftung von Hanglagen zum Einsatz. Sie zählen zum Produktprogramm nicht nur der vorliegenden Anmelderin, sondern auch der Rapid Technic AG (CH-8956 Killwangen), der Köppl GmbH (DE-94163 Saldenburg/Entschenreuth), der Irus Motorgeräte GmbH (DE-72393 Burladingen), der Agria-Werke GmbH (DE-74219 Möckmühl), der Terratec Maschinenbau GmbH (AT-6700 Bludenz), der Novaziun AG (CH-7156 Rueun) und der Reform-Werke Bauer & Co Ges.m.b.H (AT-4600 Wels). Einschlägigen Stand der Technik bilden beispielsweise auch die nachstehenden Patentdokumente ab: DE 44 05 963 A1, DE 10 2004 015 277 A1, EP 1 486 404 A1 und EP 3 246 191 B1.

Insbesondere für den Einsatz auf dem vorstehend angesprochenen landwirtschaftlichen Anwendungsgebiet werden an besagte Einachstraktoren sehr hohe, teilweise miteinander konkurrierende Anforderungen gestellt. So wird angesichts der Bearbeitung von teilweise stark geneigten Hanglagen ein tiefer Schwerpunkt gefordert; umgekehrt ist aber angesichts des teilweise sehr unebenen Geländes eine hohe Bodenfreiheit erforderlich. Im Interesse einer hohen Kippsicherheit ist generell eine große Spurbreite wünschenswert; diese beeinträchtigt aber die Wendigkeit. Für die bisweilen extrem anspruchsvolle, fordernde und kraftzehrende Arbeit mit den Einachstraktoren wäre eine ausgeprägte Unterstützung des Bedieners durch implementierte digitale Funktionalitäten des Einachstraktors vorteilhaft; aber dies könnte dessen Robustheit beeinträchtigen, die in Anbetracht des rauhen Einsatzes im Gelände ein sehr wichtiger Aspekt von hoher Praxisrelevanz ist. Hinzu kommen strenge sicherheitstechnische Anforderungen, die den Bediener im Falle eines außerplanmäßigen Ereignisses (z. B. bei einem am Hang abrutschenden Einachstraktor oder bei einem Sturz des Bedieners) schützen sollen. Weitere für die Handhabung praxisrelevante Eigenschaften sind ein niedriges Gewicht und eine ausgewogene Gewichtsverteilung und Schwerpunktlage, und zwar selbst bei Bestückung des Einachstraktors mit unterschiedlichsten Anbaugeräten für den Sommer- sowie den Wintereinsatz (z. B. mit einer Anbau-Schneefräse).

Die vorliegende Erfindung hat sich zur Aufgabe gemacht, einen Einachstraktor der eingangs angegebenen Art bereitzustellen, der sich im Sinne eines optimalen Kompromisses hinsichtlich der Erfüllung der unterschiedlichsten Anforderungen (s. o.) durch eine herausragende Praxistauglichkeit auszeichnet.

Gelöst wird diese Aufgabenstellung gemäß der vorliegenden Erfindung, indem, wie im Anspruch 1 angegeben, bei dem eingangs angegeben Einachstraktor
- die Zapf- bzw. Arbeitswelle koaxial zu der Abtriebswelle des Antriebsmotors angeordnet ist
- die Zapf- bzw. Arbeitswelle drehfest mit der Ausgangswelle eines Planetengetriebes verbunden ist, dessen Eingangswelle mit der Abtriebswelle des Antriebsmotors über eine zu dieser sowie zu der Zapf- bzw. Arbeitswelle koaxiale Wellenanordnung drehverbindbar ist, und
- das Planetengetriebe über eine doppeltwirkende Bremseinrichtung dergestalt verfügt, dass wahlweise die Ausgangswelle des Planetengetriebes oder aber dessen Zwischentrieb bremsbar ist.

Durch das - auch aus den nachstehenden Erläuterungen erkennbare - synergistische Zusammenwirken dieser charakteristischen Merkmale untereinander sowie mit den weiteren Merkmalen des erfindungsgemäßen Einachstraktors ergibt sich in einer bisher nicht erreichten Kombination bei hoher Einsatz-Flexibilität und hoher Funktionalität ein Einachstraktor mit höchster Sicherheit für den Bediener auch in außerplanmäßigen Betriebssituationen. Zu letzterer trägt in besonderer Weise bei, dass infolge der doppelt wirkenden Bremseinrichtung die Ausgangswelle des Planetengetriebes und somit die Zapf- bzw. Arbeitswelle für das Anbaugerät und mithin dieses selbst abgebremst wird, wenn die Bremsung des Zwischentriebs des Planetengetriebes aufgehoben und der Zwischentrieb somit zum Freilauf freigegeben wird. Als "Zwischentrieb" wird dabei jene der drei um die gemeinsame Getriebeachse rotierbaren Komponenten (Sonnenrad, Planetenradträger, Hohlrad) bezeichnet, die nicht direkt - getrieben bzw. treibend - der Eingangs- und der Ausgangswelle zugeordnet bzw. hiermit gekoppelt ist. Auch bei weiterhin rotierendem Antriebsmotor und einer mit dessen Abtriebswelle gekoppelten, ebenfalls weiterhin rotierenden Eingangswelle des Planetengetriebes ist so, durch praktisch zeitgleich initiiertes Leerdrehen des Planetengetriebes und Abbremsung von dessen Ausgangswelle, ein schlagartiges Anhalten der Zapf- bzw. Arbeitswelle möglich. Ein solcher sofortiger Stillstand der Zapf- bzw. Arbeitswelle ist ein großer sicherheitsrelevanter Gewinn. Denn eine durch den Bediener vorgenommene Außerbetriebsetzung des Anbaugeräts führt zu dessen umgehender aktiver Abbremsung, womit keine Gefahr mehr ausgeht von bewegten Teilen (z. B. Mähmesser, Frästrommel, Häckselwerk, etc.) des Anbaugeräts.

Zudem wirkt sich der vorstehend erläuterte erfindungsgemäße Antrieb der Zapf- bzw. Arbeitswelle über ein (mit einer doppeltwirkenden Bremseinrichtung ausgestattetes) Planetengetriebe, dessen Eingangswelle koaxial orientiert ist zu der Abtriebswelle des Antriebsmotors, sehr vorteilhaft aus im Hinblick auf eine günstige Schwerpunktlage und Gewichtsverteilung. Und auch die Rückführung der Reaktionskräfte und -momente aus dem angetriebenen Anbaugerät bis zu der Lagerung des Antriebsmotors lässt sich bei erfindungsgemäßen Einachstraktoren - verglichen mit Einachstraktoren mit Achsversatz der Arbeitswelle zur Abtriebswelle des diese treibenden Antriebsmotors - statisch relativ einfach bewirken.

Gemäß einer ersten bevorzugten Weiterbildung der Erfindung ist die Bremseinrichtung mittels einer Federeinheit, besonders bevorzugt mittels einer mechanischen Federeinheit, in ihre die Ausgangswelle des Planetengetriebes bremsende Stellung vorgespannt. Dies ist ein die inhärente Sicherheit des erfindungsgemäßen Einachstraktors weiter steigernder Aspekt; denn so lassen sich dem fail-safe Prinzip genügende Antriebs-Konzeptionen realisieren.

Eine andere bevorzugte Weiterbildung des erfindungsgemäßen Einachstraktors zeichnet sich dadurch aus, dass die Eingangswelle des Planetengetriebes mit dem Sonnenrad und dessen Ausgangswelle mit dem Hohlrad drehfest gekoppelt ist, wobei der - in deren betreffender Stellung - mittels der Bremseinrichtung bremsbare Zwischentrieb aus dem Planetenradträger besteht. Auf diese Weise ergibt sich die Möglichkeit, dass die erfindungswesentliche doppeltwirkende Bremseinrichtung besonders wirksam und zuverlässig ist, und zwar bei zugleich vergleichsweise kompakten Abmessungen des eine Untersetzung der Drehzahl des Antriebsmotors auf die angestrebte (geringere) Drehzahl der Zapf- bzw. Arbeitswelle bewirkenden Getriebes.

Besonders vorteilhaft ist weiterhin, wenn die Wellenanordnung, über welche die Abtriebswelle des Antriebsmotors mit der Eingangswelle des Planetengetriebes drehverbindbar ist und die koaxial zu den beiden genannten Wellen orientiert ist, einen in sie integrierten Drehschwingungsdämpfer umfasst. Dies trägt, indem mögliche durch den Antriebsmotor induzierte Drehschwingungen nicht bis zu der doppeltwirkenden Bremseinrichtung vordringen, zur Schonung letzterer vor unnötigem Verschleiß bei. Diese Ausgestaltung erweist sich als besonders günstig, wenn es sich bei dem Antriebsmotor um einen Verbrennungsmotor handelt. Aber auch dann, wenn der Antriebsmotor als Elektromotor ausgeführt ist, kommt der genannte Vorteil zum Tragen.

Insbesondere dann, wenn - im Sinne der vorstehenden Anmerkung - der die Zapf- bzw. Arbeitswelle treibende Antriebsmotor als Elektromotor ausgeführt ist, so ist zweckmäßigerweise auch ein elektrischer Fahrantrieb vorgesehen. In diesem Falle sind die beiden Fahrmotoren als Elektromotoren ausgeführt. Indessen ist gemäß einer bevorzugten Weiterbildung der Erfindung der Fahrantrieb als hydrostatischer Fahrantrieb ausgeführt, indem die beiden Fahrmotoren durch Hydromotoren gebildet sind. Besonders bevorzugt umfasst der Fahrantrieb dabei mindestens eine die Hydromotoren speisende Fahrantriebs-Hydraulikpumpe. Diese kann im Rahmen der vorliegenden Erfindung von einem gesonderten, d. h. von dem die Zapf- bzw. Arbeitswelle treibenden Antriebsmotor verschiedenen Elektromotor getrieben werden. Besonders vorteilhaft ist allerdings, wenn die Wellenanordnung, über welche die Abtriebswelle des Antriebsmotors mit der Eingangswelle des Planetengetriebes drehverbindbar ist, eine Antriebs-Hauptwelle aufweist, mit der die mindestens eine Fahrantrieb-Hydraulikpumpe antriebsverbindbar ist. Diese Ausgestaltung abermals weiterbildend ist sehr vorteilhaft, wenn die mindestens eine Fahrantrieb-Hydraulikpumpe über eine schaltbare Kupplung mit der besagten Antriebs-Hauptwelle der Wellenanordnung antriebsverbindbar bzw. von dieser trennbar ist. Dies kann konstruktiv insbesondere dadurch realisiert sein, dass die schaltbare Kupplung auf eine auf der Antriebs-Hauptwelle bezüglich dieser drehbar gelagerte Riemenscheibe wirkt, mit der die mindestens eine Fahrantriebs-Hydraulikpumpe über einen Antriebsriemen gekoppelt ist. So lassen sich baulich einfache, zuverlässige, kompakte Konzeptionen mit vergleichsweise geringem Gewicht und einer hohen Leistungsdichte realisieren. Unter Aspekten einer besonders hohen Zuverlässigkeit einer aktiven Lenkung (bzw. Lenkunterstützung) des Einachstraktors durch einen Differenzialantrieb der beiden angetriebenen Räder bzw. Gleisketten erweist sich als besonders günstig, wenn der hydrostatische Fahrantrieb zwei Fahrantriebs-Hydraulikpumpen umfasst, wobei jeweils eine der beiden Fahrantriebs-Hydraulikpumpen einen zugeordneten Hydromotor, d. h. jede der beiden Fahrantriebs-Hydraulikpumpen einen zugeordneten der beiden Hydromotoren speist. Besonders bevorzugt sind dabei die beiden Fahrantriebs-Hydraulikpumpen als Verstellpumpen, beispielsweise als verstellbare Axialkolbenpumpen ausgeführt. Ein besonderer Vorteil der Ausführung des Fahrantriebs mit zwei Fahrantriebs-Hydraulikpumpen ist die, verglichen zu der Beaufschlagung der beiden Hydromotoren aus einer gemeinsamen Hydraulikpumpe über einen Ventilblock, steuerungstechnisch leichter zu realisierende mechanische Ansteuerung des Fahrantriebs im Sinne der verschiedenen Fahrmodi Geradeausfahrt vorwärts und rückwärts, Kurvenfahrt vorwärts und rückwärts und Wenden auf der Stelle mit gegenläufig angetriebenen Rädern bzw. Gleisketten.

Was die Betätigung der doppeltwirkenden Bremseinrichtung des Planetengetriebes betrifft, so ist gemäß einer wiederum anderen bevorzugten Ausgestaltung der Erfindung eine hydraulische Betätigung vorgesehen. Hieraus ergeben sich gleich mehrere mögliche Vorteile. Ein ganz besonderer von ihnen ist sicherheitstechnischer Art und besteht darin, dass sich in diesem Falle mit ganz besonders geringem Aufwand in das Planetengetriebe eine wirksame Überlastsicherung integrieren lässt, welche beispielsweise bei einem blockierten Anbaugerät (z. B. aufgrund eines in das Mähwerk geratenen Steins oder sonstigen Fremdkörpers) anspricht. Eine solche Überlastsicherung, die sich durch eine definiert einstellbare Maximal-Bremskraft der doppeltwirkenden Bremseinrichtung in deren den Zwischentrieb bremsenden Stellung auszeichnet, kann bei einer hydraulischen Betätigung der doppeltwirkenden Bremseinrichtung, bei der das Bremsen des Zwischentriebs des Planetengetriebes durch eine hydraulische Druckbeaufschlagung eines Betätigungselements erfolgt, nämlich im einfachsten Falle aus einem einstellbaren Druckbegrenzungsventil bestehen. Über die Einstellung des Maximaldrucks lässt sich hier die maximale auf den Zwischentrieb wirkende Bremskraft einstellen. Gerade im Hinblick auf den flexiblen Einsatz des Einachstraktors mit unterschiedlichen Anbaugeräten ist die solchermaßen besonders leicht veränderbare maximale Bremskraft von hoher Praxisrelevanz; denn hierdurch lässt sich das Ansprechverhalten der Überlastsicherung auf einfachste Weise an das jeweilige Anbaugerät anpassen.

Ein weiterer, ebenfalls sicherheitstechnisch relevanter Vorteil der hydraulischen Betätigung der doppeltwirkenden Bremseinrichtung des Planetengetriebes besteht in einer leicht realisierbaren, zuverlässigen Umsetzung eines fail-safe Konzepts. Denn hierzu genügt, dass die Bremseinrichtung mittels einer mechanischen Federeinheit dergestalt vorgespannt ist, dass bei druckloser Betätigungshydraulik die Ausgangswelle des Planetengetriebes gebremst ist. So führt ein Ausfall der Betätigungshydraulik bzw. ein Druckabfall in dieser zum umgehenden Anhalten aller bewegt angetriebenen Teile des jeweiligen Anbaugeräts.

Ist im Sinne der weiter oben erläuterten Weiterbildung der Erfindung ein hydrostatischer Fahrantrieb realisiert, so erfolgt, gemäß einer weitergehenden, besonders bevorzugten Ausgestaltung der Erfindung, die Versorgung des hydraulischen Betätigungsgliedes der doppeltwirkenden Bremseinrichtung des Planetengetriebes über eine von der mindestens einen Hydraulikpumpe des Fahrantriebs verschiedene, beispielsweise als Zahnradpumpe ausgeführte Hilfspumpe. Ist dabei die mindestens eine Fahrantriebs-Hydraulikpumpe über den - auch die Arbeitswelle treibenden - Antriebsmotor angetrieben, namentlich indem sie über eine schaltbare Kupplung mit einer Antriebs-Hauptwelle der Wellenanordnung antriebsverbindbar bzw. von dieser trennbar ist (s. o.), so ist besonders günstig, wenn auch die Hilfspumpe über die dem hydrostatischen Fahrantrieb zugeordnete schaltbare Kupplung mit der Antriebs-Hauptwelle koppelbar bzw. von dieser trennbar ist. Ist die Kupplung, mittels derer die mindestens eine Hydraulikpumpe des Fahrantriebs mit der Antriebs-Hauptwelle koppelbar bzw. von dieser trennbar ist, geöffnet in dem Sinne, dass die mindestens eine Fahrantriebs-Hydraulikpumpe nicht angetrieben wird, so ist auch die Hilfspumpe nicht angetrieben. Diese liefert somit keinen hydraulischen Betätigungsdruck für die doppeltwirkende Bremseinrichtung, so dass, als Folge der besagten Abhängigkeit der Betätigung der Bremseinrichtung von der Schaltstellung der dem Fahrantrieb zugeordneten Kupplung, eine Betätigung der doppeltwirkenden Bremseinrichtung in diesem Falle unmöglich ist. In Verbindung mit der weiter oben erläuterten fail-safe Konzeption der doppeltwirkenden Bremseinrichtung, d. h. der Bremsung der Ausgangswelle des Planetengetriebes bei druckloser Betätigungshydraulik für die doppeltwirkende Bremseinrichtung, folgt hieraus, dass bei geöffneter dem Fahrantrieb zugeordneter Kupplung die Antriebswelle für das Anbaugerät, d. h. die Arbeitswelle zwingend gebremst ist.

Die vorstehend erläuterte Koppelung der Hilfspumpe an die mindestens eine Fahrantriebs-Hydraulikpumpe in dem Sinne, dass bei - z. B. durch Öffnen der besagten Kupplung - außer Betrieb gesetztem Fahrantrieb auch die Hilfspumpe keinen Betätigungsdruck liefert, lässt sich konstruktiv mit Vorteil insbesondere dadurch realisieren, dass die Hilfspumpe mit der Hydraulikpumpe des hydrostatischen Fahrantriebs (bzw. bei Fahrantrieben mit zwei Hydraulikpumpen mit einer von diesen) zu einer eine gemeinsame Welle aufweisenden Pumpeneinheit baulich vereinigt ist.

Eine wiederum andere besonders bevorzugte Weiterbildung des erfindungsgemäßen Einachstraktors zeichnet sich dadurch aus, dass das Fahrwerk und die Basisstruktur bezüglich einander in Längsrichtung des Einachstraktors verschiebbar sind. So lässt sich, unabhängig von dem jeweils angebauten Anbaugerät, durch Veränderung der Position der Basisstruktur bezüglich des Fahrwerks, eine optimale Gewichtsverteilung erreichen. Bei handgeführten Einachstraktoren ist das ein Aspekt von erheblicher praktischer und auch sicherheitstechnischer Relevanz für eine möglichst ermüdungsfreie Bedienung durch die Bedienperson.

Die vorliegende Erfindung eignet sich, worauf bereits wiederholt hingewiesen wurde, insbesondere für handgeführte Einachstraktoren (bzw. handgeführte einachsige Geräteträger). Für solche Anwendungen kann der erfindungsgemäße Einachstraktor in als solches bekannter Weise insbesondere eine Lenk- und Bedienhandhabe aufweisen, deren Verschwenken bezüglich der Basisstruktur um eine Hochachse auf den Fahrantrieb wirkt im Sinne einer Veränderung des Verhältnisses der Drehzahlen der beiden Fahrmotoren zueinander (sog. "aktive Lenkung"). Eine andere Anwendung, für die sich die vorliegende Erfindung mit großem Vorteil einsetzen lässt, sind autonom fahrende Einachstraktoren. Namentlich bei erfindungsgemäßen Einachstraktoren, die für einen solchen autonomen Einsatz konzipiert sind, können verschiedene weitere bevorzugte Ausgestaltungsmerkmale zum Einsatz kommen. Hier zählt insbesondere, dass der Einachstraktor zweckmäßigerweise mindestens ein relativ zu der Basisstruktur anheb- und absenkbares Stützrad aufweist. Dieses kann in besonderen Betriebssituationen, z. B. zum Anheben eines als Mähwerk ausgeführten Anbaugeräts beim Wenden des Einachstraktors, zu dessen zusätzlicher Abstützung herangezogen werden. Auch die vorstehend bereits erläuterte Ausführung des Einachstraktors dergestalt, dass das Fahrwerk und die Basisstruktur bezüglich einander in Längsrichtung des Einachstraktors verschiebbar sind, erweist sich bei für den autonomen Einsatz bestimmten erfindungsgemäßen Einachstraktoren als besonders vorteilhaft; denn in diesem Fall kann eine günstige Gewichtsverteilung essentiell sein.

Im Folgenden wird die vorliegende Erfindung anhand zweier in der Zeichnung veranschaulichter bevorzugter Ausführungsbeispiele näher erläutert. Dabei zeigt
- Fig. 1: einen Vertikalschnitt durch den für die vorliegende Erfindung maßgeblichen Bereich eines ersten Ausführungsbeispiels eines erfindungsgemäßen Einachstraktors,
- Fig. 2: in einem konstruktiv detaillierten Vertikalschnitt den auf den Antriebsmotor folgenden Bereich des Antriebsstrangs des Einachstraktors nach Fig. 1,
- Fig. 3: in einem nochmals vergrößerten Axialschnitt das Planetengetriebe des Antriebsstrangs eines gegenüber dem Ausführungsbeispiel nach den Figuren 1 und 2 geringfügig abgewandelten zweiten Ausführungsbeispiels der Erfindung und
- Fig. 4: einen gegenüber Fig. 3 versetzten Halb-Axialschnitt durch das Planetengetriebe nach Fig. 3.

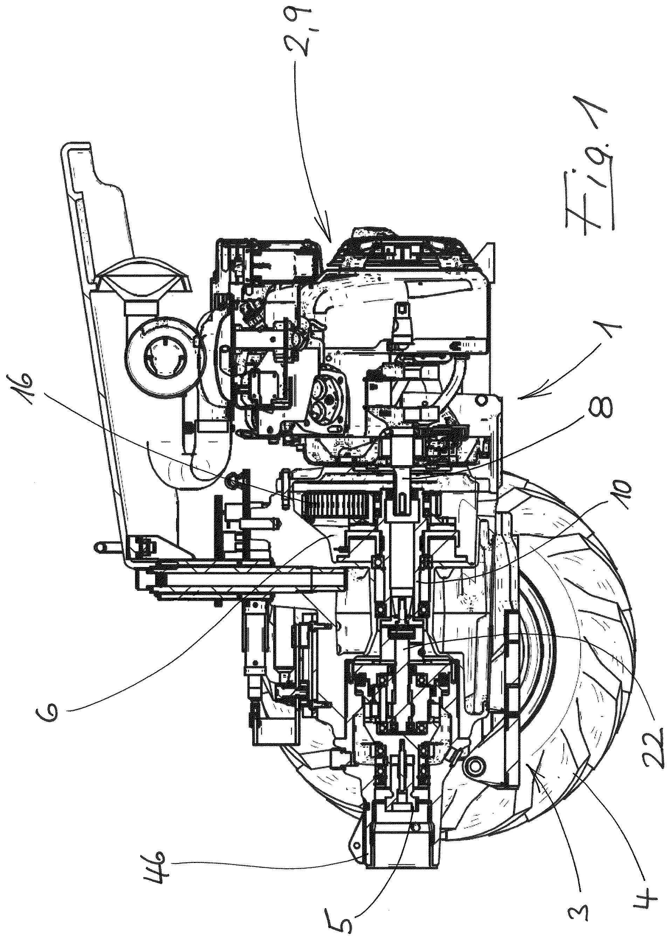

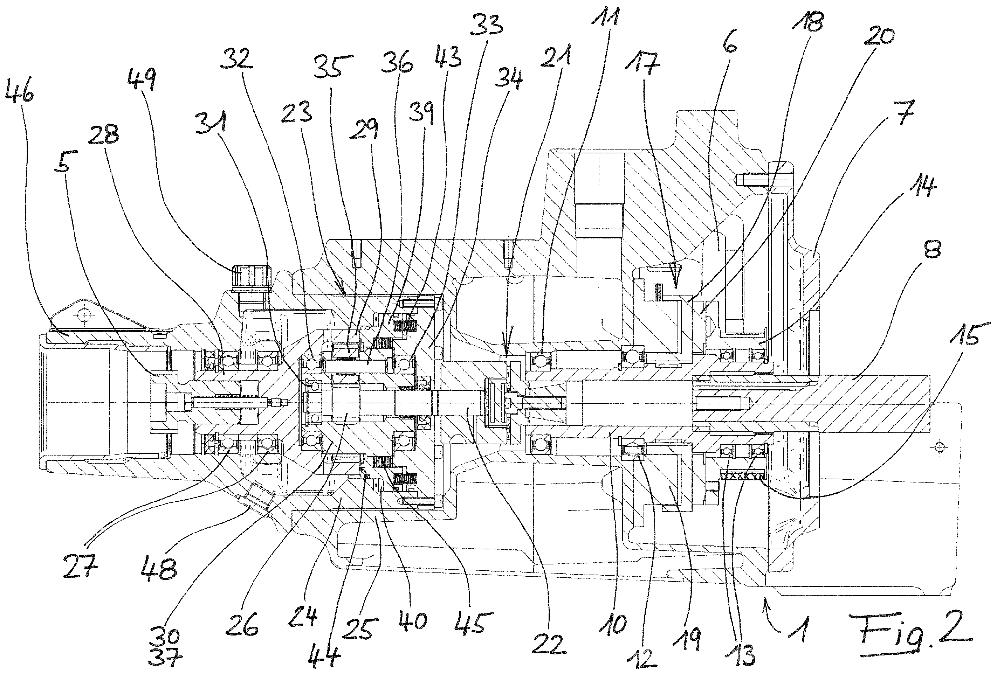

Der in den Figuren 1 und 2 der Zeichnung veranschaulichte Einachstraktor umfasst eine Basisstruktur 1 mit einem heckseitig daran angebauten Antriebsmotor 2, ein die Basisstruktur 1 abstützendes Fahrwerk 3 mit zwei mittels eines Fahrantriebs angetriebenen Rädern 4 und eine dem Betrieb von Anbaugeräten dienende frontseitige Zapf- bzw. Arbeitswelle 5. Die Zapf- bzw. Arbeitswelle 5 ist, wie nachfolgend im Detail erläutert wird, von dem Antriebsmotor 2 antreibbar. Der Fahrantrieb ist als hydrostatischer Fahrantrieb ausgeführt und umfasst zwei - ebenfalls von dem Antriebsmotor 2 antreibbare - Fahrantriebs-Hydraulikpumpen 6, wobei jede der beiden Fahrantriebs-Hydraulikpumpen 6 einen dem jeweiligen angetriebenen Rad 4 zugeordneten, jeweils einen Fahrmotor bildenden Hydromotor speist. Der eine Abtriebswelle 8 aufweisende Antriebsmotor 2 ist dabei bei dem gezeigten Ausführungsbeispiel als Verbrennungsmotor 9 - eine Ausführung als Elektromotor käme in gleicher Weise in Betracht - ausgeführt, wobei angesichts dessen, dass es sich um einen handelsüblichen Zweizylinder-Verbrennungsmotor handelt und dass es auf konstruktive Details des Antriebsmotors 2 vorliegend nicht ankommt, auf dessen Erläuterung verzichtet wird.

Die Motorwelle, d. h. die Abtriebswelle 8 des Antriebsmotors 2, durchdringt den hinteren Abschlussdeckel 7 der Basisstruktur 1 und ist drehfest mit einer - als Hohlwelle ausgeführten - Antriebs-Hauptwelle 10 verbunden, welche mittels zweier Wälzlager 11, 12 in der Basisstruktur 1 koaxial zu der Motorwelle drehbar gelagert ist. Auf der Antriebs-Hauptwelle 10 ist - über die beiden Kugellager 13 relativ zu ihr drehbar - eine Riemenscheibe 14 gelagert. Diese ist Teil der Antriebsverbindung zu dem hydrostatischen Fahrantrieb, indem sie einen Riemen 15 treibt, der seinerseits über entsprechende (nur in Fig. 1 dargestellte) Pumpen-Riemenscheiben 16 die beiden Fahrantriebs-Hydraulikpumpen 6 treibt. Die Riemenscheibe 14 ist dabei über eine elektromagnetische Kupplung 17 mit der Antriebs-Hauptwelle 10 drehkoppelbar bzw. von dieser trennbar in dem Sinne, dass sie bezüglich der Antriebs-Hauptwelle 10 frei dreht. Die schaltbare Kupplung 17 umfasst einen benachbart zu jenem Wälzlager 12 der Antriebs-Hauptwelle 10, welches dem Antriebsmotor 2 am nächsten liegt, mit der Antriebs-Hauptwelle 10 drehfest aber axialverschiebbar verbunden, diese umgebenden Kupplungstopf 18. Dieser Kupplungstopf 18 nimmt eine Spulenwicklung 19 auf, so dass er - je nach elektrischer Beaufschlagung der Spulenwicklung 19 - entweder stirnseitig reibschlüssig mit einem stirnseitig an der Riemenscheibe 14 vorgesehenen Reibbelag 20 gekoppelt oder aber von diesem entkoppelt ist. Im zuerst genannten Falle dreht sich die Riemenscheibe 14 gemeinsam mit der Antriebs-Hauptwelle 10 und treibt über den Riemen 15 die beiden Fahrantriebs-Hydraulikpumpen 6 an; in dem an zweiter Stelle genannten Fall dreht sich die Antriebs-Hauptwelle 10 unter der stillstehenden Riemenscheibe 14.

Die Antriebs-Hauptwelle 10 ist über einen DrehSchwingungsdämpfer 21 mit der Eingangswelle 22 eines Planetengetriebes 23 verbunden, dessen Getriebegehäuse 24 fest mit der Basisstruktur 1 des Arbeitsgeräts verbunden ist, indem es teilweise in eine entsprechende Aufnahme 25 eintaucht. An der Eingangswelle 22 des Planetengetriebes 23 ist dessen Sonnenrad 26 ausgeführt; und an der über die beiden Kugellager 27 in dem Getriebegehäuse 24 gelagerten Ausgangswelle 28 ist das Hohlrad 29 ausgeführt. Der Planetenradträger 30, in dem sich ihrerseits die Eingangswelle 22 endseitig über ein Kugellager 31 abstützt, ist über ein erstes Kugellager 32 in der Ausgangswelle 28 und über ein zweites Kugellager 33 in dem Deckel 34 des Getriebegehäuses 24 gelagert. Die Planetenräder 35 sind drehbar auf Lagerbolzen 36 gelagert, welche Teil des - einen Zwischentrieb 37 bildenden - Planetenradträgers 30 sind.

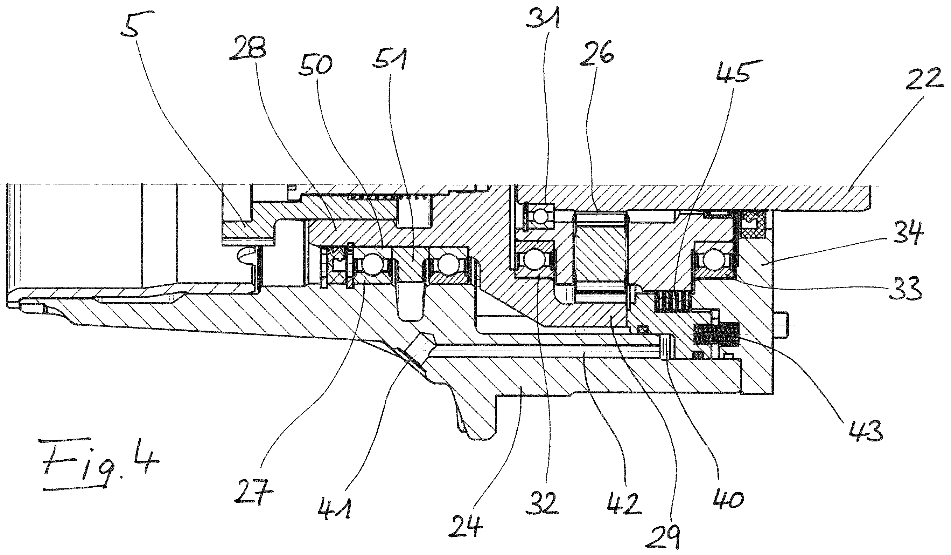

In einer zwei zylindrische Abschnitte aufweisenden, gestuft ausgeführten Bohrung 38 des Getriebegehäuses 24 ist ein ringförmiger, an seinem Außenumfang ebenfalls gestuft ausgeführter Bremskolben 39 axial verschiebbar, aber - über zueinander korrespondierende Verzahnungen an dem Deckel 34 des Getriebegehäuses 24 - drehgesichert geführt. Das Getriebegehäuse 24 und der Bremskolben 39 begrenzen dabei miteinander einen ringförmigen hydraulischen Arbeitsraum 40. Dieser ist - vgl. zu diesen in Fig. 2 nicht gezeigten Merkmalen die insoweit übereinstimmende Fig. 4 - durch einen Hydraulikanschluss 41 und eine Bohrung 42 hindurch hydraulisch beaufschlagbar. Ohne eine solche Beaufschlagung liegt der Bremskolben 39 unter Wirkung der Bremsfedern 43 stirnseitig an der gegenüberliegenden Ring-Stirnfläche 44 der Ausgangswelle 28 (bzw. des an dieser ausgeführten Hohlrads 29) an und bremst diese. Wird indessen der Arbeitsraum 40 mit Hydraulikflüssigkeit beaufschlagt, hebt - ab einem die Vorspannkraft der Bremsfedern 43 überwindenden Druck - der Bremskolben 39 von der Ring-Stirnfläche 44 der Ausgangswelle 28 ab und gibt diese frei; zugleich bremst der Bremskolben 39 nun - über ein Ring-Lamellenpaket 45 - den Planetenradträger 30. Auf diese Weise verfügt das Planetengetriebe 23 über eine doppeltwirkende Bremseinrichtung dergestalt, dass wahlweise die Ausgangswelle 28 des Planetengetriebes 23 oder aber dessen Zwischentrieb 37 bremsbar ist.

Die in der zweiten Stellung des Bremskolbens 39 auf den Planetenradträger 30 wirkende, dessen Drehen um die Achse X hindernde Bremskraft ist dabei über den in dem Arbeitsraum 40 herrschenden Hydraulikduck einstellbar. Auf diese Weise ist in das Planetengetriebe 23 eine Überlastsicherung integriert, indem für die Bremseinrichtung in deren den Zwischentrieb 37 bremsenden Stellung eine Maximal-Bremskraft einstellbar ist. Wird diese - beispielsweise bei einem Blockieren der Ausgangswelle 28 - überschritten, so kann der Planetenradträger 30, d. h. der Zwischentrieb 37, gegen die auf ihn wirkende Bremskraft drehen.

Die Versorgung der hydraulisch betätigbaren doppeltwirkenden Bremseinrichtung des Planetengetriebes 23 erfolgt dabei über eine von den Hydraulikpumpen 6 des Fahrantriebs in dem Sinne verschiedene Hilfspumpe, dass die Bremshydraulik einerseits und die Antriebshydraulik andererseits strömungstechnisch vollständig getrennt sind. Allerdings ist die Hilfspumpe mit einer der beiden Hydraulikpumpen 6 des hydrostatischen Fahrantriebs dergestalt baulich vereinigt, dass die betreffende, eine Fahrantriebs-Hydraulikpumpe sowie die Hilfspumpe umfassende Pumpeneinheit eine einzige, gemeinsame Welle aufweist. So dreht sich die Hilfspumpe nur dann, wenn - bei bestehender Antriebsverbindung zwischen der Antriebs-Hauptwelle 10 und der Riemenscheibe 14 infolge geschlossener Kupplung 17 - der hydrostatische Fahrantrieb in Betrieb (bzw. bei Leerlaufbetrieb der Fahrantriebs-Hydraulikpumpen 6 in Betriebsbereitschaft) ist.

Die Zapf- bzw. Arbeitswelle 5, die mit der Abtriebswelle 8 des Antriebsmotors 2 und der Antriebs-Hauptwelle 10 auf der gleichen Achse X liegt, ist drehfest mit der Ausgangswelle 28 des Planetengetriebes 23 verbunden. Allerdings ist sie gefedert, d. h. gegen die Kraft der Schraubenfeder 47 axial einrückbar, um das Ankuppeln eines Anbaugeräts - unter Eingriff eines Stutzens des Anbaugeräts in den Kragen 46 des Getriebegehäuses 24 - zu erleichtern.

Erkennbar sind in Fig. 2 schließlich an dem Getriebegehäuse 24 eine Ölablassschraube 48 sowie eine die Öleinfüllöffnung verschließende Verschlussschraube 49.

Da der Einachstraktor nach den Figuren 1 und 2 der Zeichnung, soweit sich aus den vorstehend erläuterten Besonderheiten nichts Anderes ergibt, konzeptionell dem allgemein bekannten Stand der Technik entspricht, kann auf weitergehende Erläuterungen verzichtet und insoweit auf bekannte Einachstraktoren verwiesen werden.

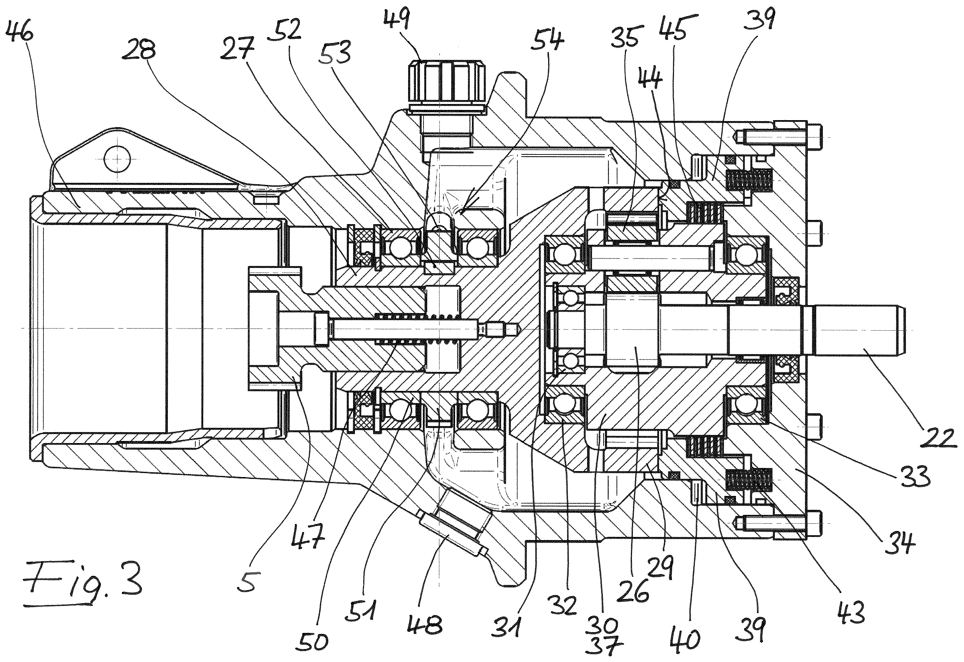

Das in den Figuren 3 und 4 - in zwei verschiedenen Axial-Schnitten - veranschaulichte Planetengetriebe unterscheidet sich von jenem, wie es bei dem in den Figuren 1 und 2 gezeigten Ausführungsbeispiel eines Einachstraktors nach der vorliegenden Erfindung zum Einsatz kommt, im Wesentlichen nur durch eine Besonderheit. Und zwar ist zwischen den beiden Innenringen 50 der die Ausgangswelle 28 des Planetengetriebes lagernden Kugellager 27 statt einer einfachen Distanzhülse ein Polrad 51 angeordnet, welches - über die Passfeder 52 - drehfest mit der Ausgangswelle 28 des Planetengetriebes verbunden ist. In dem Getriebegehäuse 24 ist, dem Polrad 51 gegenüberstehend, ein Sensor 53 angeordnet. Mittels der das Polrad 49 und den zugeordneten Sensor 53 umfassenden Messanordnung 54 wird die Drehzahl der Ausgangswelle 28 des Planetengetriebes überwacht. Das entsprechende Drehzahlsignal kann dabei insbesondere in der Steuerung des Einachstraktors verarbeitet werden, namentlich im Zusammenhang mit einer Anpassung des Drucks in der hydraulischen Betätigungseirichtung der doppeltwirkenden Bremseinrichtung.

## Patentansprüche

1. Einachstraktor, umfassend
- eine Basisstruktur (1) mit einem daran angebauten Antriebsmotor (2) mit einer Abtriebswelle (8),
- ein die Basisstruktur (1) abstützendes Fahrwerk (3) mit zwei angetriebenen Rädern (4) oder Gleisketten,
- einen Fahrantrieb mit zwei den beiden angetriebenen Rädern (4) bzw. Gleisketten zugeordneten Fahrmotoren und
- eine von dem Antriebsmotor (2) antreibbare, dem Betrieb von Anbaugeräten dienenden Zapf- bzw. Arbeitswelle (5)
mit den folgenden Merkmalen:
- die Zapf- bzw. Arbeitswelle (5) ist koaxial zu der Abtriebswelle (8) des Antriebsmotors (2) angeordnet;
- die Zapf- bzw. Arbeitswelle (5) ist drehfest mit der Ausgangswelle (28) eines Planetengetriebes (23) verbunden, dessen Eingangswelle (22) mit der Abtriebswelle (8) des Antriebsmotors (2) über eine zu dieser sowie zu der Zapf- bzw. Arbeitswelle (5) koaxiale Wellenanordnung drehverbindbar ist;
- das Planetengetriebe (23) verfügt über eine doppeltwirkende Bremseinrichtung dergestalt, dass wahlweise die Ausgangswelle (28) des Planetengetriebes (23) oder aber dessen Zwischentrieb (37) bremsbar ist.

2. Einachstraktor nach Anspruch 1, **dadurch gekennzeichnet, dass** die Bremseinrichtung mittels einer Federeinheit in ihre die Ausgangswelle (28) des Planetengetriebes (23) bremsende Stellung vorgespannt ist.

3. Einachstraktor nach Anspruch 1 oder Anspruch 2, **dadurch gekennzeichnet, dass** die Eingangswelle (22) des Planetengetriebes (23) mit dem Sonnenrad (26) und dessen Ausgangswelle (28) mit dem Hohlrad (29) drehfest gekoppelt ist, wobei der mittels der Bremseinrichtung bremsbare Zwischentrieb (37) aus dem Planetenradträger (30) besteht.

4. Einachstraktor nach einem der Ansprüche 1 bis 3, **dadurch gekennzeichnet, dass** der Fahrantrieb als hydrostatischer Fahrantrieb ausgeführt ist, indem die beiden Fahrmotoren durch Hydromotoren gebildet sind.

5. Einachstraktor nach Anspruch 4, **dadurch gekennzeichnet, dass** der Fahrantrieb mindestens eine die Hydromotoren speisende Fahrantriebs-Hydraulikpumpe (6) umfasst, wobei die Wellenanordnung eine Antriebs-Hauptwelle (10) aufweist, mit der die mindestens eine Fahrantrieb-Hydraulikpumpe (6) antriebsverbindbar ist.

6. Einachstraktor nach Anspruch 5, **dadurch gekennzeichnet, dass** die mindestens eine Fahrantrieb-Hydraulikpumpe (6) über eine schaltbare Kupplung (17) mit der Antriebs-Hauptwelle (10) antriebsverbindbar bzw. von dieser trennbar ist.

7. Einachstraktor nach Anspruch 6, **dadurch gekennzeichnet, dass** die schaltbare Kupplung (17) auf eine auf der Antriebs-Hauptwelle (10) bezüglich dieser drehbar gelagerte Riemenscheibe (14) wirkt, mit der die mindestens eine Fahrantriebs-Hydraulikpumpe (6) über einen Antriebsriemen (15) bzw. eine Antriebskette gekoppelt ist.

8. Einachstraktor nach einem der Ansprüche 4 bis 7, **dadurch gekennzeichnet, dass** der hydrostatische Fahrantrieb zwei Fahrantriebs-Hydraulikpumpen (6) umfasst, wobei jede der beiden Fahrantriebs-Hydraulikpumpen (6) einen zugeordneten der beiden Hydromotoren speist.

9. Einachstraktor nach einem der Ansprüche 1 bis 8, **dadurch gekennzeichnet, dass** die Wellenanordnung einen in sie integrierten Drehschwingungsdämpfer (21) umfasst.

10. Einachstraktor nach einem der Ansprüche 1 bis 9, **dadurch gekennzeichnet, dass** die Bremseinrichtung des Planetengetriebes hydraulisch betätigbar ist.

11. Einachstraktor nach Anspruch 10, **dadurch gekennzeichnet, dass** die Bremseinrichtung mittels einer mechanischen Federeinheit dergestalt vorgespannt ist, dass bei druckloser Betätigungshydraulik die Ausgangswelle (28) des Planetengetriebes (23) gebremst ist.

12. Einachstraktor nach Anspruch 10 oder Anspruch 11, wobei gemäß einem der Ansprüche 4 bis 8 ein hydrostatischer Fahrantrieb vorgesehen ist, **dadurch gekennzeichnet, dass** die Versorgung des hydraulischen Betätigungsglieds der Bremseinrichtung des Planetengetriebes (23) über eine von der mindestens einen Fahrantriebs-Hydraulikpumpe (6) des Fahrantriebs verschiedene Hilfspumpe erfolgt.

13. Einachstraktor nach Anspruch 12, wobei gemäß Anspruch 6 eine schaltbare Kupplung (17) vorgesehen ist, **dadurch gekennzeichnet, dass** die Hilfspumpe über die dem hydrostatischen Fahrantrieb zugeordnete schaltbare Kupplung (17) mit der Antriebs-Hauptwelle (10) koppelbar bzw. von dieser trennbar ist.

14. Einachstraktor nach Anspruch 13, **dadurch gekennzeichnet, dass** die Hilfspumpe mit der mindestens einen Fahrantriebs-Hydraulikpumpe (6) des hydrostatischen Fahrantriebs zu einer eine gemeinsame Welle aufweisenden Pumpeneinheit baulich vereinigt ist

15. Einachstraktor nach einem der Ansprüche 1 bis 14, **dadurch gekennzeichnet, dass** in das Planetengetriebe (23) eine Überlastsicherung integriert ist, indem für die Bremseinrichtung in deren den Zwischentrieb (37) bremsenden Stellung eine Maximal-Bremskraft einstellbar ist.

16. Einachstraktor nach einem der Ansprüche 1 bis 15, **dadurch gekennzeichnet, dass** er eine Lenk- und Bedienhandhabe aufweist, deren Verschwenken bezüglich der Basisstruktur (1) um eine Hochachse auf den Fahrantrieb wirkt im Sinne einer Veränderung des Verhältnisses der Drehzahlen der beiden Fahrmotoren zueinander.

17. Einachstraktor nach einem der Ansprüche 1 bis 16, **dadurch gekennzeichnet, dass** das Fahrwerk (3) und die Basisstruktur (1) bezüglich einander in Längsrichtung des Einachstraktors verschiebbar sind.

18. Einachstraktor nach einem der Ansprüche 1 bis 17, **dadurch gekennzeichnet, dass** er mindestens ein relativ zu der Basisstruktur (1) anheb- und absenkbares Stützrad aufweist.

19. Einachstraktor nach einem der Ansprüche 1 bis 18, **dadurch gekennzeichnet, dass** eine die Drehzahl der Ausgangswelle (28) des Planetengetriebes überwachende Messanordnung (54) vorgesehen ist.
